# EUROPÄISCHE PATENTSCHRIFT

(11) **EP 2 496 386 B1**
(45) Veröffentlichungstag und Bekanntmachung des Hinweises auf die Patenterteilung: **08.04.2015**
(21) Anmeldenummer: 10781592.0
(22) Anmeldetag: 02.10.2010
(51) Int. Cl.: B25B 23/00

(54) **SCHRAUBVORRICHTUNG**
FASTENING DEVICE
DISPOSITIF DE VISSAGE

(30) Priorität: 06.11.2009 DE 202009015144 U
(43) Veröffentlichungstag der Anmeldung: 12.09.2012
(73) Patentinhaber: Weber, Josef, 93199 Zell (DE)
(72) Erfinder: Weber, Josef, 93199 Zell (DE)
(74) Vertreter: Graf Glück Kritzenberger
(86) Internationale Anmeldenummer: PCT/DE2010/001170
(87) Internationale Veröffentlichungsnummer: WO 2011/054328

(56) Entgegenhaltungen:
- US-A- 2 940 488
- US-A- 5 484 026
- US-A1- 2006 236 815
- US-A1- 2007 034 060

## Beschreibung

Die Erfindung betrifft eine Schraubvorrichtung zur gleichzeitigen Ausrichtung und Montage von Unterkonstruktionen gemäß dem Oberbegriff des Patentanspruchs 1.

Gattungsgemäße Schraubvorrichtungen sind in Form von Bithaltern aus dem Stand der Technik hinreichend bekannt. Unter dem Begriff Bithalter wird im Allgemeinen ein Vorsatzwerkzeug für ein motorisch oder manuell angetriebenes Schraubwerkzeug, beispielsweise einen Schraubendreher oder eine elektrisch oder pneumatisch angetriebene Schraubmaschine verstanden, deren eines freies Ende zum Verbinden mit dem Schraubwerkzeug beispielsweise durch Einführen und Verklemmen in einem Bohrfutter ausgebildet ist. Am zweiten freien Ende des Bithalters ist eine Bitaufnahme vorgesehen. Diese Bitaufnahme ist insbesondere sacklochartig ausgebildet und weist umfangsseitig eine Sechskantform zur verdrehsicheren Verbindung des Bithalters mit dem Bit auf. Der Bithalter bildet somit einen Adapter zum erleichterten und schnelleren Auswechseln von Bits.

Unter dem Begriff Bit wird im Folgenden allgemein eine auswechselbare Schraubendreherklinge verstanden, deren eines freies Ende eine an den jeweiligen Schraubentyp angepasste Klinge, beispielsweise in Form eines Kreuzschlitz, Torx o.ä., aufweist und deren zweites freies Ende an die Form der Bitaufnahme angepasst ist, d.h. beispielsweise umfangsseitig eine Sechskantform aufweist und damit teilweise in die Bitaufnahme einführbar ist.

Speziell im Trockenbau stellt sich die Problematik, dass an einer Wand oder Decke eine Unterkonstruktion zum anschließenden Anbringen von Panelen oder Gipskartonplatten geschaffen werden soll, die in einer definierten Ebene ausgerichtet ist. Eine derartige Ausrichtung kann beispielsweise durch eine Richtschnur oder einen ein Referenzniveau definierenden Nivellierlaser erfolgen, so dass ausgehend von dieser Richtschnur oder diesem Referenzniveau in einem definierten Abstand dazu die Unterkonstruktion beispielsweise in Form einer Konterlattung errichtet wird.

Das Ausrichten der Unterkonstruktion, die häufig aus einer Grundkonstruktion und einer darauf angebrachten Konterlattung besteht, auf die gewünschte Ebene erfolgt hierbei beispielsweise durch Hinein- bzw. Herausschrauben von Schraubmitteln, insbesondere Justierschrauben, so dass ein konstanter Abstand der Konterlattung zum Referenzniveau entsteht. Hierzu ist es notwendig dass der Handwerker neben dem Hinein- bzw. Herausschrauben der Schraubmittel gleichzeitig ein Messwerkzeug, beispielsweise einen Meterstab, bedient, um damit den Abstand zum Referenzniveau messen zu können. Dies hat zur Folge, dass durch das gleichzeitige Schrauben und Messen beide Hände des betreffenden Handwerkers gebunden sind. Dies macht das Arbeiten äußerst umständlich. Daher wird sehr oft praktiziert, dass die Arbeiten von mehreren Handwerkern im Team ausgeführt werden, wobei der eine vornehmlich das Messen und der andere die Schraub- und Justierarbeiten übernimmt. Dies stellt somit einen erhöhten Personal- und Kostenaufwand dar und ist daher unerwünscht.

Aus der US 2007/0034060 A1 ist bereits eine Schraubvorrichtung bekannt, bestehend aus einem Bithalter, an dessen ersten freien Ende ein Schaft zur Verbindung mit dem Schraubwerkzeug und an dessen zweiten gegenüberliegenden freien Ende eine Bitaufnahme vorgesehen ist. Der Bithalter wird dabei zumindest teilweise von einem Hülsenelement umgeben, wobei an der Außenseite des Hülsenelements eine Messeinteilung angebracht ist. Mit Hilfe zweier auf dem Bithalter aufgeschraubter Ringelemente wird das Hülsenelement derart justiert, dass das Schraubmittel nur soweit in das Material eingedreht werden kann, bis ein voreingestellter Überstand erreicht ist.

Ausgehend hiervon liegt der Erfindung die Aufgabe zugrunde, einen neuartigen Bithalter anzugeben, mittels dem neben dem Einschrauben der Schraubmittel gleichzeitig eine Messung des Abstandes zwischen der zu erstellenden Unterkonstruktion und einem Referenzniveau möglich ist. Die Aufgabe wird ausgehend vom Oberbegriff des Patentanspruchs 1 durch dessen kennzeichnende Merkmale gelöst.

Der wesentliche Aspekt der erfindungsgemäßen Schraubvorrichtung ist darin zu sehen, dass ein Bithalter vorgesehen ist, der umfangsseitig zumindest teilweise entlang seiner Längsachse von einem Hülsenelement umgeben ist und das Hülsenelement von einer Ruheposition aus in zwei gegenläufige Richtungen verschiebbar ist.

In einer bevorzugten Ausführungsform ist das Hülsenelement federbelastet gegenüber dem Bithalter verschiebbar. In der Ruheposition ist das in der Bitaufnahme des Bithalters aufgenommene Bit vollständig oder nahezu vollständig in ebendiesem aufgenommen. Beim Einschrauben eines Schraubmittels in die Unterkonstruktion gelangt das Hülsenelement zur Anlage gegenüber der Unterkonstruktion, so dass die auf dem Hülsenelement angebrachte Messeinteilung den Abstand der Unterkonstruktion zum Referenzniveau angibt. Bei Verwendung eines Nivellierlasers wird hierbei mittels des ausgesandten Laserstrahls das Referenzniveau auf der Messeinteilung abgebildet, so dass der Abstand zwischen Unterkonstruktion direkt abgelesen werden kann, und zwar insbesondere gleichzeitig während Verändern des Abstandes durch Hinein- bzw. Herausschrauben der Schraubmittel.

Weitere vorteilhafte Weiterbildungen der Erfindung sind Gegenstand der abhängigen Ansprüche. Nachfolgend wird die Erfindung an einem Ausführungsbeispiel anhand von mehreren Figuren näher beschrieben. Es zeigen:
- Fig. 1.: beispielhaft eine erfindungsgemäße Schraubvorrichtung in einer seitlichen Darstellung;
- Fig. 2: beispielhaft eine erfindungsgemäße Schraubvorrichtung in einer seitlichen Schnittdarstellung;
- Fig. 3: beispielhaft eine erfindungsgemäße Schraubvorrichtung bei Anlage gegen eine Unterkonstruktion in einer seitlichen Schnittdarstellung;
- Fig. 4: beispielhaft eine Draufsicht auf eine erfindungsgemäße Schraubvorrichtung mit eingesetztem Bit.

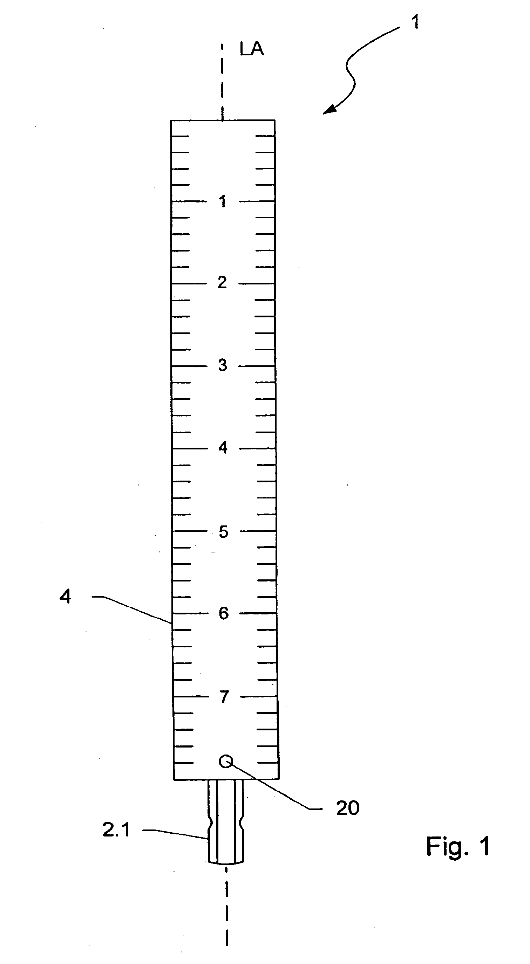

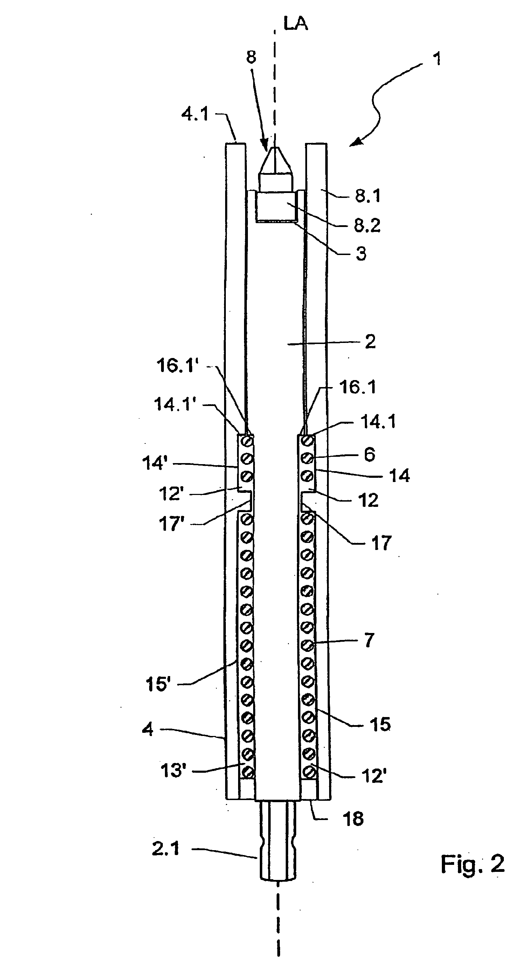

Figuren 1 und 2 zeigen beispielhaft eine erfindungsgemäße Schraubvorrichtung 1 in einer seitlichen Darstellung bzw. in einer seitlichen Schnittdarstellung. Die Schraubvorrichtung 1 besteht im Wesentlichen aus einem Bithalter 2 mit einem Schaft 2.1, der eine Sechskantform aufweist. Dieser Schaft 2.1 dient der Verbindung der Schraubvorrichtung 1 mit einem Schraubwerkzeug, das beispielsweise ein manueller Schraubendreher oder eine elektrisch oder pneumatisch angetriebene Schraubmaschine sein kann. An dem dem Schaft 2.1 gegenüberliegenden Ende des Bithalters 2 ist eine Bitaufnahme 3 vorgesehen, die beispielsweise aus einer sacklochartigen, sechskantförmigen Einmuldung besteht. Die Bitaufnahme 3 ist zur Aufnahme eines Verbindungsbereichs 8.2 eines Bits 8 ausgebildet, und zwar derart, dass die Bitaufnahme 3 den Verbindungsbereich 8.2 zumindest teilweise formschlüssig umschließt, sodass das Bit 8 mit der Bitaufnahme 3 verdrehsicher verbunden sind. Innerhalb der Bitaufnahme 3 kann ein Sicherungselement beispielsweise in Form eines Magneten oder einer seitlich auf das Bit 8 einwirkenden Kugel vorgesehen sein, so dass das Bit 8 gegen ein Herausfallen aus der Bitaufnahme 3 gesichert ist.

Gemäß dem die Erfindung tragenden Gedanken ist der Bithalter 2 umfangsseitig zumindest teilweise entlang der Längsachse LA von einem Hülsenelement 4 umgeben, an deren Außenseite eine Messeinteilung angebracht ist. Liegt die Stirnseite 4.1 des Hülsenelements 4 beim Anbringen beispielsweise einer abgehängten Deckenunterkonstruktion an der Unterseite 9.1 eines Unterkonstruktionselements 9 an, so kann mittels der auf dem Hülsenelement 4 angebrachten Messeinteilung der Abstand dieser Unterseite 9.1 zu einem Referenzniveau 11, das beispielsweise von einem Nivellierlaser vorgegeben wird, gemessen und durch Einschrauben bzw. Herausschrauben der Schraubmittel 10 gleichzeitig verändert werden. Damit ist es möglich, dass eine Vielzahl von zueinander beabstandeten Unterkonstruktionselementen 9 in konstantem Abstand bezogen auf das Referenzniveau 11 ausgerichtet werden, sodass die Unterseite 9.1 der Unterkonstruktionselemente 9 in einer Ebene zu liegen kommen.

Der Bithalter 2 ist vorzugsweise einstückig ausgebildet und bildet an seinem ersten freien Ende den Schaft 2.1, an seinem zweiten gegenüberliegenden freien Ende die Bitaufnahme 3 aus. Damit bildet der Bithalter 2 ein zentral durch das Hülsenelement 4 verlaufendes Element aus, das das von einem Schraubwerkzeug auf den Schaft 2.1 übertragene Drehmoment über die Bitaufnahme 3 an den darin eingesetzten Bit 8 überträgt.

Gemäß einer bevorzugten Ausführungsform ist das Hülsenelement 4 entlang der Längsachse LA der Schraubvorrichtung 1 verschiebbar. Diese Verschiebung kann vorzugsweise in zwei zueinander gegenläufige Richtungen erfolgen, d.h. das Hülsenelement 4 kann sowohl in Richtung des Schaftes 2.1 als auch vom Schaft 2.1 weg verschoben werden. Um eine unkontrollierte Verschiebung des Hülsenelements 4 zu begrenzen, ist zumindest ein Paar von gegenläufig wirkenden Federn 6, 7 vorgesehen. Die Wirkungsweise der vorgespannten Federn ist zueinander entgegengesetzt, und zwar derart, dass die Feder 6 eine Verschiebung des Hülsenelements 4 in Richtung des Schaftes 2.1 und die Feder 7 die Verschiebung des Hülsenelements 4 vom Schaft 2.1 weg bewirkt. Die Federn 6, 7 können beispielsweise durch um den Bithalter 4 umfangseitig verlaufende Spiralfedern gebildet sein. Abweichend hiervon ist es auch möglich, anstelle der Verwendung von umlaufenden Spiralfedern mehrere Einzelfedern vorzusehen.

Die Federn 6, 7 sind beispielsweise in zwischen dem Hülsenelement 4 und dem Bithalter 2 ausgebildeten, umfangsseitig verlaufenden Ausnehmungen 12, 12', 13, 13' aufgenommen, wobei die Ausnehmungen 12, 12', 13, 13' durch Aussparungen 14, 14', 15, 15', 16, 16' gebildet sind. Die Aussparungen 14, 14', 15, 15' reduzieren hierbei die Wandstärke des Hülsenelements 4, die Aussparungen 16, 16' den Durchmesser des Bithalters 2. Die Ausnehmungen 12, 12', 13, 13' sind zudem durch Vorsprünge 17, 17', die an der Innenwandung des Hülsenelements 4 vorgesehen sind, voneinander getrennt.

In die Ausnehmung 12, 12' ist die Feder 6 und in die Ausnehmung 13, 13' ist die Feder 7 eingeführt, wobei die Feder 6 zwischen den Kanten 14.1, 14.1', 16.1, 16.1' der Aussparungen 14, 14', 16, 16' und den Vorsprüngen 17, 17' und die Feder 7 zwischen den Vorsprüngen 17, 17' und dem Verschließelement 18 eingespannt ist.

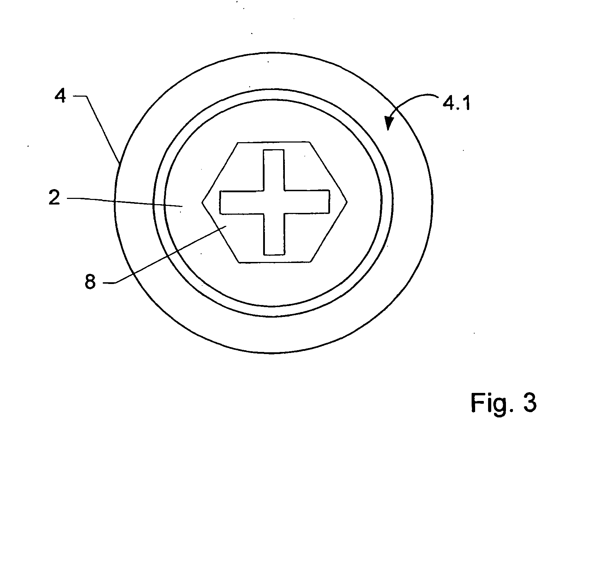

Aufgrund der Federkräfte der Federn 6, 7 wird das Hülsenelement 4 gegenüber dem Bithalter 2 in derjenigen Verschiebeposition gehalten, in der sich die gegenläufig wirkenden Federkräfte der Federn 6, 7 gegenseitig aufheben. Wird nun ausgehend hiervon das Hülsenelement 4 nach oben hin, d.h. vom Schaft 2.1 weg verschoben, komprimiert sich die Feder 6, wohingegen die Feder 7 entlastet wird. In umgekehrter Richtung, d.h. für den Fall, dass das Hülsenelement 4 nach unten in Richtung des Schaftes 2.1 verschoben wird, erfährt die Feder 7 eine Kompression und die Feder 6 wird entspannt. Nach dem Wegfall von äußeren Kräften, die auf das Hülsenelement 4 wirken, wird das Hülsenelement 4 aufgrund des Ungleichgewichts der auf das Hülsenelement 4 einwirkenden Federkräfte der Federn 6, 7 derart zurückverschoben, dass sich das anfänglich herrschende Federgleichgewicht wieder einstellt. In dieser Ruheposition ist vorzugsweise die Klinge 8.1 des Bits 8 vollständig in das Hülsenelement zurückgezogen. Ein Verkanten des Bithalters 2 gegenüber dem Hülsenelement 4 beim Verschieben wird dadurch verhindert, dass dieses im Querschnitt rundrohrförmig ausgebildet ist und in seinem Inneren passgenau den im Querschnitt kreisrunden Bithalter 2 aufnimmt (Figur 3).

Für den Fall, dass die Verschiebung des Hülsenelementes 4 gegenüber dem Bithalter 2 hinderlich ist, beispielsweise dann, wenn kein Ausrichten der Unterkonstruktion erforderlich ist, kann das Hülsenelement 4 gegenüber dem Bithalter verschiebesicher festgestellt werden. Dies erfolgt beispielsweise über einen radial in den Innenraum des Hülsenelements 4 einschiebbaren Stift, der zumindest teilweise den Bithalter einschiebbar ist und im eingeschobenen Zustand die Verschiebung des Hülsenelements 4 gegenüber dem Bithalter 2 unterbindet. Die Sicherung kann insbesondere in einer Position erfolgen, bei der die Klinge 8.1 des Bits 8 vollständig aus dem Hülsenelement 4 hervorsteht.

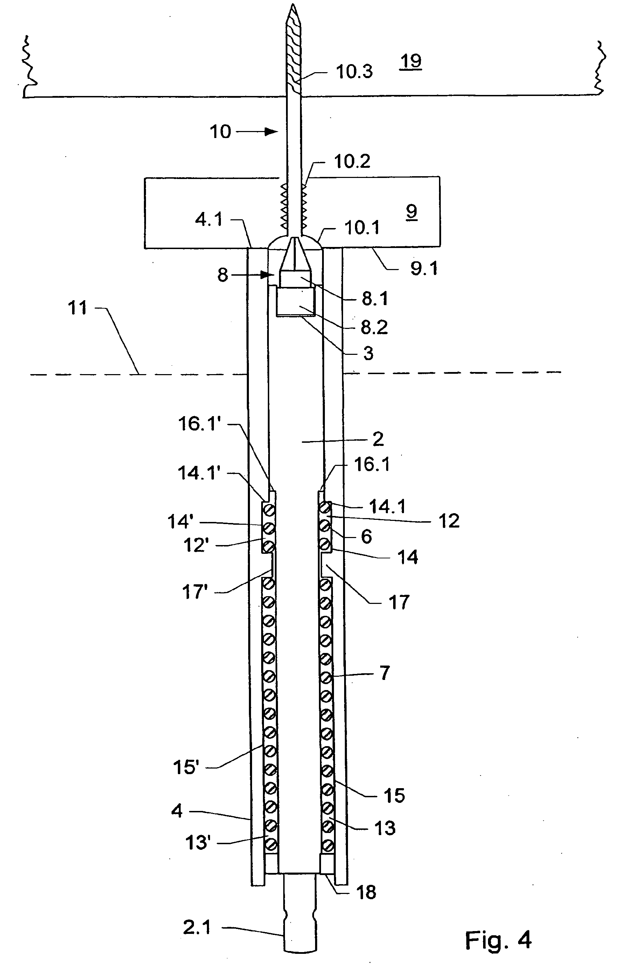

Im Folgenden wird anhand von Figur 4 das Anbringen eines Unterkonstruktionselementes 9 an einer Grundkonstruktion 19 und das Ausrichten desselbigen in Bezug auf das Referenzniveau 11 beschrieben. Zunächst wird das Schraubmittel 10 durch das Unterkonstruktionselement 9 soweit eingeschraubt, dass der Kopf 10.1 bündig mit der Unterseite 9.1 des Unterkonstruktionselementes 9 ist. Bei dem Schraubmittel 10 handelt es sich vorzugsweise um eine Justierschraube, die unterhalb des Kopfes 10.1 einen Rillenabschnitt 10.2 aufweist, der verhindert, dass das Schraubmittel 10 erneut aus dem Tragkonstruktionselement 9 herausgeschraubt werden kann. Das Schraubmittel 10 wird anschließend in die Grundkonstruktion19, die beispielsweise ein Sparren oder eine Wand sein kann, mittels des Gewindeabschnitts 10.3 eingebracht. Durch Hinein- bzw. Herausdrehen des Schraubmittels 10 kann nun der Abstand d zwischen dem Referenzniveau 11 und der Unterseite 9.1 des Unterkonstruktionselementes 9 verändert werden. Beim Aufsetzen der Stirnseite 4.1 des Hülsenelementes 4 auf das Unterkonstruktionselement 9 wird der Bithalter 2 samt dem in der Bitaufnahme 3 aufgenommenen Bit 8 aus dem Hülsenelement 4 herausgeschoben, wobei die Klinge 8.1 des Bits 8 in den Kopf 10.1 des Schraubmittels 10 eingreift. Die Stirnseite 4.1 des Hülsenelementes 4 wird dabei federbelastet zur Anlage gegenüber der Unterseite 9.1 des Unterkonstruktionselementes 9 gedrückt. Da die Stirnseite 4.1 die Nulllinie der Messeinteilung darstellt, markiert der bei Verwendung eines Nivellierlasers ausgesandte sichtbare Laserstrahl auf der Messeinteilung einen Wert, der unmittelbar den Abstand d der Unterseite 9.1 des Unterkonstruktionselementes 9 zum Referenzniveau 11 angibt.

Aufgrund der federbelasteten Vorspannung des Hülsenelements 4 folgt dieses beim Heraus- bzw. Hineinschrauben des Schraubmittels 10 dem dadurch sich verschiebenden Unterkonstruktionselement 9, sodass die daraus resultierende Abstandänderung unmittelbar an der Messeinteilung des Hülsenelements 4 abgelesen werden kann. Dies erfolgt zudem aufgrund der Verschiebbarkeit des Bithalters 2 zum Hülsenelement 4 unabhängig von der Lage des Kopfes 10.1 des Schraubmittels 10 in Bezug auf die Unterseite 9.1 des Unterkonstruktionselementes 9. D.h. ein vorstehender oder zu tief in das Unterkonstruktionselement 9 eingeschraubter Kopf 10.1 ist unerheblich für das Messergebnis.

Zum erleichterten Ablesen der Messeinteilung ist diese vorzugsweise umfangseitig umlaufend auf dem Hülsenelement 4 vorgesehen, sodass unabhängig vom Standort des Nivellierlasers bzw. von der Drehstellung des Hülsenelements 4 der Abstand d ablesbar ist. Zudem kann das Hülsenelement 4 umfangseitig eine reflektierende und/oder spiegelnde Oberfläche aufweisen, die beispielsweise durch eine diese Eigenschaften aufweisende Folie gebildet ist. Dadurch wird ein auf dieser reflektierenden und/oder spiegelnden Oberfläche abgebildeter Laserstrahl auch bei ungünstigen Lichtverhältnissen leichter sichtbar, d.h. das Messergebnis selbst ist besser ablesbar.

Die Erfindung wurde voranstehend an einem Ausführungsbeispiel beschrieben. Es versteht sich, dass zahlreiche Modifikationen und Änderungen der Erfindung gemäß der beiliegenden Ansprüche möglich sind, ohne dass hierdurch der Erfindungsgedanke verlassen wird.

### Bezugszeichenliste

- 1: Schraubvorrichtung
- 2: Bithalter
- 2.1: Schaft
- 3: Bitaufnahme
- 4: Hülsenelement
- 4.1: Stirnseite
- 6: Feder
- 7: Feder
- 8: Bit
- 8.1: Klinge
- 8.2: Verbindungsbereich
- 9: Unterkonstruktionselement
- 9.1: Unterseite
- 10: Schraubmittel
- 10.1: Kopf
- 10.2: Rillenabschnitt
- 10.3: Gewindeabschnitt
- 11: Referenzniveau
- 12, 12': Ausnehmung
- 13, 13': Ausnehmung
- 14, 14': Aussparung
- 14.1,14.1': Kante
- 15, 15': Aussparung
- 16, 16': Aussparung
- 16.1, 16.1': Kante
- 17, 17': Vorsprung
- 18: Verschließelement
- 19: Grundkonstruktion
- 20: Stift
- d: Abstand
- LA: Längsachse

## Patentansprüche

1. Schraubvorrichtung zur Montage und Ausrichtung von Unterkonstruktionen insbesondere im Trockenbau bestehend aus einem Bithalter (2) mit einem Schaft (2.1) zur Verbindung mit einem Schraubwerkzeug und einer Bitaufnahme (3), wobei der Bithalter (2) umfangsseitig zumindest teilweise entlang seiner Längsachse (LA) von einem Hülsenelement (4) umgeben ist, welches entlang der Längsachse (LA) des Bithalters (2) verschiebbar ist und an der Außenseite des Hülsenelements (4) eine Messeinteilung angebracht ist, **dadurch gekennzeichnet, dass** das Hülsenelement (4) von einer Ruheposition aus in zwei gegenläufige Richtungen verschiebbar ist.

2. Schraubvorrichtung nach Anspruch 1, **dadurch gekennzeichnet, dass** das Hülsenelement (4) federbelastet verschiebbar ist.

3. Schraubvorrichtung nach Anspruch 1, **dadurch gekennzeichnet, dass** das Hülsenelement (4) entgegen der Federkraft zumindest eines Paares von gegenläufig wirkenden Federn (6, 7) gegenüber dem Bithalter (2) verschiebbar ist.

4. Schraubvorrichtung nach Anspruch 2 oder 3, **dadurch gekennzeichnet, dass** das Hülsenelement (4) gegenüber dem Bithalter (2) verschiebesicher feststellbar ist.

5. Schraubvorrichtung nach einem der vorhergehenden Ansprüche, **dadurch gekennzeichnet, dass** das Hülsenelement (4) rundrohrförmig ausgebildet ist und dass der Bithalter (2) passgenau im Hülsenelement (4) aufgenommen ist.

6. Schraubvorrichtung nach einem der vorhergehenden Ansprüche, **dadurch gekennzeichnet, dass** der Bithalter (2) einstückig ausgebildet ist und am ersten freien Ende des Bithalters (2) der Schaft (2.1) und am zweiten freien Ende die Bitaufnahme (3) ausbildet ist.

7. Schraubvorrichtung nach einem der vorhergehenden Ansprüche, **dadurch gekennzeichnet, dass** die Messeinteilung umfangsseitig umlaufend ist.

8. Schraubvorrichtung nach einem der vorhergehenden Ansprüche, **dadurch gekennzeichnet, dass** die Messeinteilung auf einer reflektierenden und/oder spiegelnden Oberfläche aufgebracht ist.

## Claims

1. A screwing device for installing and aligning substructures, particularly in dry construction, consisting of a bit holder (2) with a shaft (2.1) for connection to a screwing tool and a bit receptacle (3), wherein the bit holder (2) is surrounded on the circumferential side at least to some extent along the longitudinal axis (LA) thereof by a sleeve element (4) being displaceable along the longitudinal axis (LA) of the bit holder (2), and a measuring scale is applied on the outer side of the sleeve element (4), **characterised in that** the sleeve element (4), starting from a resting position, is displaceable in two opposite directions.

2. The screwing device according to claim 1, **characterised in that** the sleeve element (4) can be displaced in a spring-loaded manner.

3. The screwing device according to claim 1, **characterised in that** the sleeve element (4) is displaceable counter to the spring force of at least one pair of oppositely acting springs (6, 7) with respect to the bit holder (2).

4. The screwing device according to claim 2 or 3, **characterised in that** the sleeve element (4) is lockable such that it is secured against displacement with respect to the bit holder (2).

5. The screwing device according to one of the preceding claims, **characterised in that** the sleeve element (4) is designed in the shape of a round tube and **in that** the bit holder (2) is accommodated in the sleeve element (4) with an accurate fit.

6. The screwing device according to one of the preceding claims, **characterised in that** the bit holder (2) is of one-piece construction, the shaft (2.1) being designed on the first free end of the bit holder (2) and the bit receptacle (3) being designed on the second free end.

7. The screwing device according to one of the preceding claims, **characterised in that** the measuring scale runs around on the circumferential side.

8. The screwing device according to one of the preceding claims, **characterised in that** the measuring scale is applied on a reflective and/or mirrored surface.

## Revendications

1. Dispositif de vissage pour le montage et l'orientation de structures de support, en particulier dans la construction à sec, constitué d'un porte-embouts (2) avec une tige (2.1), pour la liaison avec un outil de vissage, et une admission d'embout (3), dans lequel le porte-embouts (2) est au moins partiellement entouré par un élément de douille (4) le long de son axe longitudinal (LA), du côté du pourtour, lequel peut coulisser le long de l'axe longitudinal (LA) du porte-embouts (2), et dans lequel une graduation est prévue du côté extérieur de l'élément de douille (4), **caractérisé en ce que** l'élément de douille (4) peut coulisser dans deux directions opposées à partir d'une position de repos.

2. Dispositif de vissage selon la revendication 1, **caractérisé en ce que** l'élément de douille (4) est coulissant sous contrainte de ressort.

3. Dispositif de vissage selon la revendication 1, **caractérisé en ce que** l'élément de douille (4) est coulissant par rapport au porte-embouts (2) contre la force de ressort d'au moins une paire de ressorts (6, 7) agissant dans des directions opposées.

4. Dispositif de vissage selon la revendication 2 ou 3, **caractérisé en ce que** l'élément de douille (4) peut être bloqué par rapport au porte-embouts (2), sans possibilité de déplacement.

5. Dispositif de vissage selon l'une des revendications précédentes, **caractérisé en ce que** l'élément de douille (4) est conçu comme un tube rond et **en ce que** le porte-embouts (2) est reçu précisément dans l'élément de douille (4).

6. Dispositif de vissage selon l'une des revendications précédentes, **caractérisé en ce que** le porte-embouts (2) est conçu d'une seule pièce, et **en ce que** la tige (2.1) est formée à la première extrémité libre du porte-embouts (2) et l'admission d'embout (3) est formée à la deuxième extrémité libre.

7. Dispositif de vissage selon l'une des revendications précédentes, **caractérisé en ce que** la graduation est périphérique du côté du pourtour.

8. Dispositif de vissage selon l'une des revendications précédentes, **caractérisé en ce que** la graduation est appliquée sur une surface réfléchissante et/ou miroitante.
